# EUROPÄISCHE PATENTSCHRIFT

(11) **EP 3 241 449 B1**
(45) Veröffentlichungstag und Bekanntmachung des Hinweises auf die Patenterteilung: **16.12.2020**
(21) Anmeldenummer: 16167969.1
(22) Anmeldetag: 02.05.2016
(51) Int. Cl.: A23G 1/12, A23G 1/14, A23G 1/16

(54) **VORRICHTUNG UND VERFAHREN ZUM BEARBEITEN VON LEBENSMITTELMASSEN**
APPARATUS AND METHOD FOR PROCESSING FOOD MASSES
DISPOSITIF ET PROCÉDÉ DE TRAITEMENT DE MASSES D'ALIMENTS

(43) Veröffentlichungstag der Anmeldung: 08.11.2017
(73) Patentinhaber: Bühler AG, 9240 Uzwil (CH)
(72) Erfinder: Gräber, Matthias, London, SE3 7LX (GB); Braun, Peter, 8280 Kreuzlingen (CH); Keller, Juerg P., 4612 Wangen bei Olten (CH)
(74) Vertreter: Hepp Wenger Ryffel AG

(56) Entgegenhaltungen:
- EP-A1- 1 043 070
- EP-A2- 0 123 015
- WO-A1-2015/022374
- WO-A2-2007/121596
- DE-A1- 19 723 316
- DE-A1-102005 037 387

## Beschreibung

Die Erfindung betrifft eine Vorrichtung zum Bearbeiten von Lebensmittelmassen, insbesondere von Schokoladenmassen, sowie ein Verfahren zum Bearbeiten von Lebensmittelmassen, insbesondere Schokoladenmassen, ein Verfahren zum Aufbau einer Vorrichtung und ein Computerprogramm zum Betreiben einer Vorrichtung.

Bei der Herstellung und Bearbeitung von Lebensmittelmassen, insbesondere von Fettmassen wie Schokolade, werden die Komponenten der Masse zunächst miteinander gemischt und die Grundmasse wird beim Mischen und gegebenenfalls beim Kneten homogen und plastisch. Bei den Komponenten der Masse handelt es sich um feste und/oder flüssige Bestandteile, Trockenbestandteile, Flüssigkeiten und/oder pastöse Massen.

Aus der Druckschrift EP 2353707 und den darin zitierten Druckschriften sind beispielsweise Vorrichtungen zum Mischen bekannt, die einen Kessel mit einer angetriebenen Welle aufweisen, wobei an der Welle Werkzeuge, insbesondere Misch-, Homogenisierungs-, Scher-, Schabe- und/oder Förderwerkzeuge angeordnet sind.

Schokoladenmassen, bzw. kakaohaltige Massen, bestehen aus einer Mischung von Komponenten, wie Kakaomasse, Kakaoliquor, Zucker, Milchpulver und anderen, in der Regel fein gemahlenen Feststoffen, die suspendiert oder fein dispergiert in einer Kakaobutter oder einem anderen Fett vorliegen, welches bei entsprechender Temperatur als Flüssigkeit betrachtet werden kann. In aufeinanderfolgenden Schritten werden die Ausgangsmaterialien vermischt, wobei aus einer pulver- oder krümelförmigen Menge schlussendlich eine glatte, pastöse oder flüssige Masse wird. Der Menge können ausserdem weitere Komponenten, wie Aromastoffe oder Emulgatoren zugefügt werden.

Einer der typischen Verarbeitungsschritte für eine Schokoladenmasse ist das Conchieren, wobei chemische und physikalische Prozesse ablaufen und/oder Stoffe, insbesondere unerwünschte Aromastoffe, entweichen und sich das gewünschte Schokoladenaroma einstellt. Beim Conchieren wird die Masse in der Regel Scher- und/oder Knetkräften ausgesetzt. Dabei wird die Masse homogenisiert, entfeuchtet, von unerwünschten volatilen Bestandteilen befreit, feste Agglomerate brechen auf und Teilchen können abgerundet werden.

Die Viskosität der Masse nimmt ab, die Fliessfähigkeit und die Konsistenz der Masse werden verbessert. Um dies zu begünstigen, kann Emulgator hinzugefügt werden.

Grundsätzlich wird davon ausgegangen, dass längeres Conchieren zu einem sensorisch verbesserten Endprodukt führt.

Gleichzeitig besteht ein wirtschaftliches Bedürfnis, den Conchierprozess als zeit- und energieaufwendiges Verfahren möglichst effizient zu gestalten.

Aus US 5,591,476 ist ein Verfahren bekannt, bei welchem die Drehgeschwindigkeit an die sich ändernde Konsistenz der zu verarbeitenden Masse angepasst wird, insbesondere derart, dass eine konstante Kraft auf die Masse einwirkt. Dazu wird beispielwiese die Drehzahl erhöht, wenn die flüssiger werdenden Masse weniger Widerstand bietet.

Der Widerstand, den die Masse den Werkezeugen bietet und der zum Beispiel über die notwendige Motorkraft ermittelt werden kann, hängt allerdings nicht nur von der Konsistenz der Masse ab, sondern zum Beispiel auch von der Menge, der Temperatur und den Inhaltsstoffen, also der Rezeptur. Zudem können unerwünschte Effekte auftreten, wie das Ausbilden von kleinen, körnigen Bestandteilen, insbesondere bei zu hohem Energieeintrag, die nicht unmittelbar zu einem erhöhten Drehwiderstand führen und somit nicht zum Beispiel über die Antriebsleistung oder das Antriebsmoment von Motor oder Werkzeug feststellbar sind.

Die Information betreffend Drehmoment und Drehzahl von Motor und/oder Werkzeug allein reicht daher nicht aus, um die Konsistenz der Masse zuverlässig zu beurteilen und es ist kaum möglich, in Abhängigkeit von Antriebsleistung oder Antriebsmoment von Motor oder Werkzeug das weitere Vorgehen festzulegen.

Aus der DE19723316 A1 ist eine Conchieranlage bekannt, bei welcher die Zusammensetzung der Schokoladenmasse mit einem Spektrometer überwacht wird, da mit Hilfe des Spektrometers eine chemische Analyse der Inhaltsstoffe möglich ist. Das Spektrometer wird zur Regelung der Zugabemenge eines Additivs herangezogen.

Die EP1043070 A1 offenbart eine Mahlvorrichtung mit einer Vielzahl von Walzen, bei welcher Bilderverarbeitungsmittel die Oberfläche auf mindestens einer der Walzen abbilden. Jedes Pixel des dargestellten Bildes kann einer physikalischen Eigenschaft entsprechen. Es kann beispielsweise festgestellt werden, ob die bearbeitete Masse die Walze auf der gesamten Breite benetzt oder welche Temperaturverteilung vorliegt.

Es ist die Aufgabe der Erfindung, die Nachteile des Bekannten zu vermeiden und eine Vorrichtung und ein Verfahren bereitzustellen, welche eine effiziente Bearbeitung von Lebensmittelmassen ermöglichen.

Die Aufgabe wird gelöst mit einer Vorrichtung zur Bearbeitung von Lebensmittelmassen nach Anspruch 1. Bei den Lebensmittelmassen handelt es sich bevorzugt um fetthaltige Lebensmittelmassen. Bei der Bearbeitung handelt es sich insbesondere um das Conchieren von schokoladenhaltigen und/oder kakaohaltigen Massen. Erfindungsgemäss umfasst die Vorrichtung mindestens einen, bevorzugt zylindrischen, Behälter oder Kessel und mindestens eine, insbesondere horizontal angeordnete, Welle, die bevorzugt parallel zu der Zylinderachse des Behälters angeordnet ist, die mit mindestens einem Werkzeug ausgestattet ist, welches insbesondere drehbar um die Wellenachse angeordnet ist.

Im Betriebszustand erfährt die Lebensmittelmasse in dem Kessel eine Bearbeitung durch die Werkzeuge.

Erfindungsgemäss umfasst die Vorrichtung mindestens einen Sensor zum Erfassen von Messgrössen, wobei die Messgrössen einen Rückschluss auf mindestens eine Oberflächeneigenschaft, insbesondere die Oberflächenstruktur, der Lebensmittelmasse erlauben.

Es kann auch eine Kombination von Messgrössen erfasst werden, wie zum Beispiel Leistungseintrag und Drehzahl, oder andere.

Oberflächeneigenschaften sind die Eigenschaften der Oberfläche, wie zum Beispiel das Höhenprofil, die Welligkeit, die Krümmungsgrade, und/oder Eigenschaften der Masse, die sich auf, an und/oder in der Nähe der Oberfläche der Masse manifestieren, wie Farbe, Temperatur, Dichte, Viskosität, Körnigkeit.

Der Sensor kann Messgrössen erfassen, die beispielsweise jeweils in Form von Werten von Wellenlängen, Amplituden oder Frequenzen elektromagnetischer, insbesondere optischer, oder akustischer Wellen, Werten von Helligkeiten, Werten von Temperaturen, Werten von Signalintensitäten oder Werten von mechanischen Ausschlägen erfasst werden können, welche in Bezug zu lokalen Oberflächeneigenschaften stehen und somit die Oberflächenstruktur charakterisieren.

Der Sensor ist insbesondere geeignet für eine orts- und bevorzugt auch zeitaufgelöste Erfassung der Messgrössen.

Der Sensor kann ein Bildgebungsmittel umfassen, das beispielsweise ein fotografische Aufnahme, ein Thermogramm oder ein spektral-optisch aufgelöstes charakteristisches Spektrogramm der Masse erzeugt.

Insbesondere beim Conchieren von Schokoladenmasse, aber auch beim Mischen, Kneten und Zerkleinern, ändert sich im Lauf der Bearbeitung die Konsistenz der Masse, zum Beispiel die Homogenität, die Viskosität und damit die internen Kraftverhältnisse, die Körnigkeit, die Teilchengrössen enthaltener Partikel, die Fettverteilung, die Aromafreisetzung und andere Grössen. Die sukzessive Verbesserung der Qualität spiegelt sich in der Oberflächenbeschaffenheit wieder.

Eine Vorrichtung mit Sensor zur Erfassung von Messwerten, die Rückschlüsse auf die Oberflächenstruktur erlauben, ermöglicht daher eine automatisierte Charakterisierung des Zustandes der Lebensmittelmasse in der Vorrichtung.

Erfindungsgemäß entsprechen die Messwerte dem Höhenprofil der Lebensmittelmasse entlang einer Linie oder entlang einer Vielzahl von Linien, insbesondere über die Länge und/oder Breite des Behälters oder der Welle, oder dem Höhenprofil der Lebensmittelmasse über einer Fläche.

Das Höhenprofil könnte beispielsweise mit einem Tastsensor mechanisch ermittelt werden.

Erfindungsgemäß handelt es sich bei dem Sensor um einen berührungslosen Sensor, der die Oberfläche der in dem Behälter befindlichen Lebensmittelmasse berührungslos erfasst.

Insbesondere ist der Sensor ein optischer oder akustischer Sensor.

Vorteilhafterweise ist der Sensor geeignet für eine zeitlich fortlaufende Erfassung der Messgrössen. Der Sensor erfasst die Messsignale bevorzugt kontinuierlich oder quasikontinuierlich über einen Zeitraum. Der Sensor kann somit eine sich zeitlich verändernde Oberflächenstruktur erfassen, so dass für die weitere Verarbeitung nicht nur Daten von Momentaufnahmen, sondern auch Daten von dynamischen Vorgängen zur Verfügung stehen.

Der Sensor kann somit unabhängig von dem Verarbeitungsprozess arbeiten, die Verarbeitung wird durch die Messung nicht unmittelbar beeinflusst und muss auch nicht unterbrochen werden.

Der Sensor ist bevorzugt im oberen oder seitlichen Bereich des Behälters angeordnet, sodass der Sensor auf eine freie Oberfläche der Masse, die nicht von einem Werkzeug oder einer Behälterwand begrenzt wird, gerichtet werden kann.

Der Sensor ist bevorzugt so angeordnet, dass der Behälter für eine Messung nicht geöffnet werden muss, sodass den in der Lebensmitteltechnologie notwendigen hygienischen Anforderungen Rechnung getragen wird.

Vorteilhafterweise ist der Sensor in oder an einer Behälteröffnung angeordnet und/oder in einem Behälterdeckel, so dass der Sensor leicht für Wartungs- und Reinigungszwecke zugänglich ist. Bevorzugt ist der Sensor auf einem Sensorträger angeordnet, der seinerseits am Behälter montierbar ist.

Bei dem Sensor kann es sich beispielsweise um eine optische Kamera, eine Infrarotkamera, ein optisches Spektrometer oder um einen Ultraschallsensor handeln.

In einer vorteilhaften Ausführung der Erfindung handelt es sich bei dem Sensor um einen Laserwegmessgeber, der insbesondere mindestens eine Messlinie scannt. Der Sensor kann dafür schwenkbar oder bewegbar sein, einen schwenkbaren oder bewegbaren Spiegel besitzen oder ein Messarray aufweisen. Der Sensor ist insbesondere so angebracht, dass die Messlinie parallel zur Wellenachse verläuft und/oder die Abtastlänge der Arbeitsbreite der Welle entspricht.

Der Laserwegmessgeber erfasst den Abstand zwischen Messpunkten auf der Oberfläche eines im Laserstrahl befindlichen Objekts und dem Sensor und ermittelt somit ein Oberflächenprofil entlang der Messlinie. Beim Erfassen mehrerer Messlinien kann auch ein Oberflächenprofil über einer Fläche ermittelt werden.

Zusätzlich kann die Vorrichtung mit weiteren Sensoren ausgestattet sein, zum Beispiel zum Erfassen der Temperatur in dem Behälter und/oder der im Behälter befindlichen Masse, zum Erfassen der Drehzahl einer Welle, zum Erfassen des Stroms und/oder der Leistung des Motors zum Antrieb der Welle, zum Erfassen des Gewichts der Lebensmittelmasse und/oder Füllgrades des Behälters und/oder zum Erfassen des Drehmoments und/oder der Drehzahl des Werkzeugs.

Vorteilhafterweise umfasst die Vorrichtung Verarbeitungsmittel, welche dafür ausgelegt sind, die ermittelten Messgrössen zu analysieren und daraus ein Struktursignal oder eine Strukturinformation zu erzeugen, welche für den Zustand der Lebensmittelmasse, insbesondere den Grad der Homogenität der Lebensmittelmasse, repräsentativ sind.

Während der Bearbeitung der Lebensmittelmasse, insbesondere beim Conchieren, werden zunächst die Ausgangsstoffe zusammengegeben. Es bilden sich in einer zum Beispiel zunächst pulverförmigen Masse mit kurzreichweitigen Höhenprofiländerungen zunächst kleinere, dann grössere Agglomerate, bevor die Masse pastös und zuletzt flüssig wird. Bei Bearbeitung einer Masse mit Fettvorlage kann auch zunächst ein flüssiger Zustand der Masse vorliegen, die sich nach Zugabe weitere Ingredienzen verfestigt, bevor sie wieder versalbt.

Für jeden Zustand ist eine zugehörige Strukturklasse definierbar. Das heisst, die Oberflächeneigenschaften können in Klassen klassiert werden, die mit einem entsprechenden Struktursignal, beispielsweise einem Strukturindex, also einer Zahl, gekennzeichnet werden können.

Das Struktursignal stellt eine objektivierte Bewertung der Oberflächeneigenschaft zu Verfügung. Das Ergebnis hängt, anders als bei einer visuellen Inspektion durch einen Bediener, nicht von den Fähigkeiten, Erfahrungen und der subjektiven Einschätzung des jeweiligen Bedieners ab.

An dem Verlauf des von dem Verarbeitungsmittel erzeugten Struktursignals kann der Zustand der Masse nachvollziehbar und reproduzierbar abgelesen und bewertet werden, insbesondere von einem Datenverarbeitungsmittel.

Bei dem Signal kann es sich um eine skalare Grösse handeln, zum Beispiel einen Strukturindex, oder um ein Wertetupel, also eine bestimmte Anzahl von Werten.

Die Charakteristik der Masse kann beispielsweise in Klassen eingeteilt werden, die mit einem Strukturindexwert zwischen 0 und 10 bewertet werden, wobei der Wert 0 eine kleinteilige, sandartige Struktur und der Wert 10 eine zusammenhängende, glatte Flüssigkeit bemisst.

Die Ermittlung des Struktursignals aus den Messgrössen erfolgt, bevorzugt adaptiv, nach einem vorgegebenen oder einem gelernten Algorithmus. Vorteilhafterweise umfassen die Verarbeitungsmittel Mittel zur ein- oder mehrdimensionalen Mustererkennung.

In einer vorteilhaften Ausführung der Vorrichtung umfasst die Vorrichtung Steuermittel, welche dafür ausgelegt sind, auf Grundlage der Messgrössen oder auf Grundlage des von einem Verarbeitungsmittel erzeugten Struktursignals ein Steuersignal zum Einstellen von mindestens einem Betriebsparameter zur Verfügung zu stellen.

Die Oberflächenstruktur und der damit in direktem Zusammenhang stehende Zustand der Masse kann es erlauben oder notwendig machen, dass mit einem bestimmten Bearbeitungsschritt begonnen wird, dass die Bearbeitung unterbrochen oder beendet wird oder dass die Bearbeitung verändert wird.

Eine derartige Massnahme wird mit einer Einstellung von entsprechenden Betriebsparametern vorgenommen.

Bei den Betriebsparametern kann es sich um die Temperatur, die Drehzahl der Welle, die Leistung oder den Strom des Motors zum Antreiben des Werkzeugs oder der Werkzeuge, die Beendigung und/oder den Start des Bearbeitungsvorgangs handeln und/oder die Stellung eines Ventils, um die Zufuhr von weiteren Komponenten der Lebensmittelmasse einzustellen und damit die Rezeptur der Lebensmittel zu ändern.

Das Steuersignal kann zur Veränderung von einem oder mehreren Betriebsparametern führen. Das Steuersignal kann ein Start- oder Endsignal enthalten und/oder den Grad der Veränderung angeben, beispielsweise eine bestimmte Temperatur- oder Leistungsänderung vorgeben.

Eine Veränderung der Betriebsparameter hat in der Regel eine Änderung des Zustandes der Lebensmittelmasse und damit der Oberflächenstruktur zur Folge.

Vorteilhafterweise umfasst die Vorrichtung daher eine Regeleinrichtung, welche dafür ausgelegt ist, aufgrund von Messgrössen Struktursignale zu erzeugen, diese mit einem Struktursollwertsignal zu vergleichen und bei Erreichen einer vorgegebenen Nähe des Struktursignals zum Sollwertsignal mindestens eine Steuergrösse zum Einstellen von mindestens einem Betriebsparameter zur Verfügung zu stellen.

Das Struktursollwertsignal kann vorgegeben sein oder sich aus früher ermittelten Signalen ergeben.

Die Regeleinrichtung verarbeitet Messgrössen, die kontinuierlich oder quasikontinuierlich über den Bearbeitungszeitraum erfasst werden.

Mit der Regeleinrichtung kann die Bearbeitung zum Beispiel unterbrochen werden und/oder die Betriebsparameter können verändert werden, wenn eine vorgegeben Struktur erreicht ist oder wenn sich die Struktur über einen bestimmten Zeitraum nicht verändert.

Zu den Betriebsparametern zählen die Temperatur, die eingetragenen Leistung und/oder zugeführte Komponenten. Die Temperatur des Behälters und/oder in dem Behälter kann beispielsweise über einen Heizkreislauf eingestellt werden.

Der Bearbeitungsprozess kann somit im Hinblick auf die nötige Arbeitszeit, die aufzuwendende Energie und im Hinblick auf die zu erreichende Struktur der Lebensmittelmasse optimiert werden.

Die Aufgabe wird ausserdem gelöst durch ein Verfahren zum Betreiben einer Vorrichtung zur Bearbeitung von, insbesondere fetthaltigen, Lebensmittelmassen, insbesondere zum Conchieren von schokoladenhaltigen Massen. Insbesondere handelt es sich um ein Verfahren zum Betreiben einer Vorrichtung wie sie oben beschrieben ist.

Das erfindungsgemässe Verfahren umfasst die Schritte des Erfassens von Messgrössen mit einem oder mehreren Sensoren zum Erfassen von Messgrössen, die einen Rückschluss auf die Oberflächeneigenschaften der Lebensmittelmasse erlauben.

Die Messwerte werden ortsaufgelöst, bevorzugt zusätzlich zeitaufgelöst erfasst.

Erfindungsgemäß werden Messgrössen ermittelt, die dem Höhenprofil der Lebensmittelmasse entlang einer Linie oder entlang einer Vielzahl von Linien, insbesondere über die Länge und/oder Breite des Behälters oder der Welle, oder dem Höhenprofil der Lebensmittelmasse über einer Fläche entsprechen.

Die Messgrössen, und damit das Höhenprofil, können beispielsweise entlang oder parallel zu einer Wellenachse erfasst werden.

Erfindungsgemäß wird die Oberfläche der in dem Behälter befindlichen Lebensmittelmasse berührungslos erfasst, insbesondere mit einem elektromagnetischen, thermischen, optischen oder akustischen Sensor, wie insbesondere weiter oben beschrieben.

Die Oberfläche wird ortsaufgelöst in einer oder zwei Dimensionen erfasst.

Die Erfassung der Messwerte erfolgt bevorzugt zeitlich fortlaufend.

In einer vorteilhaften Ausbildung des erfindungsgemässen Verfahrens wird ein Struktursignal, insbesondere wie weiter oben beschrieben, erzeugt, das das für den Zustand der Lebensmittelmasse, insbesondere den Grad der Homogenität der Lebensmittelmasse, repräsentativ ist.

Das Struktursignal kann aus einem Satz von Messwerten bestimmt werden, die repräsentativ für einen Zeitpunkt oder eine Zeitspanne sind. Beispielsweise kann ein Streifen der Oberfläche mit einer Wiederholfrequenz von 250 Hz abgescannt werden und alle 10 Sekunden ein Struktursignal bestimmt werden, das die Messwerte der letzten 40 Sekunden berücksichtigt.

Alternativ oder zusätzlich kann in das Struktursignal auch die Veränderung von Messwerten in einem bestimmten Zeitraum einfliessen.

Das Verfahren umfasst insbesondere einen Schritt, bei dem ein Steuersignal erzeugt wird, das mindestens einen Betriebsparameter einstellt und/oder regelt.

Bevorzugt handelt es sich bei dem erfindungsgemässen Verfahren um ein Verfahren, bei dem ein Struktursignal erzeugt wird, das mit einem Struktursignalsollwert vergleichen wird. Aufgrund des Vergleichs erfolgt ein automatisches Erzeugen eines Steuersignals zum Einstellen von mindestens einem Betriebsparameter.

Der Vergleich kann zur Folge haben, dass die Bearbeitung mit unveränderten Betriebsparametern weitergeführt wird, wenn zum Beispiel das Struktursignal einen grossen Abstand zum Struktursignalsollwert hat. Die Bearbeitung kann abgebrochen werden, wenn das Struktursignal eine festgesetzte Nähe zu einem Struktursignalsollwert erreicht hat, oder die Betriebsparameter werden verändert, wenn sich das Struktursignal zu schnell oder zu langsam ändert, bzw. wenn die Struktursignaländerung in einem bestimmten Zeitraum einen gesetzten Grenzwert unter- oder überschreitet.

Die Verfahrensschritte können wiederholt durchgeführt werden, sodass ein geregelter Prozess abläuft.

Zu dem Verfahren können das Einfüllen von Komponenten in den Behälter, das Ausführen der Masse aus dem Behälter, die Umkehr der Drehrichtung der Werkzeuge, das Temperieren der Masse, der Abtransport flüchtiger Bestandteile, das Kneten, Mischen, Scheren, Werfen und/oder Versalben der Lebensmittelmasse gehören. Vorteilhafterweise umfasst das Verfahren ausserdem Kalibrierschritte. Diese umfassen das Erfassen von Messgrössen an einer Modellmasse, wobei die Messgrössen der Oberflächenstruktur der Modellmasse entsprechen, insbesondere dem Höhenprofil der Modellmasse entlang einer Linie oder einer Vielzahl von Linien, insbesondere über die Länge und/oder Breite des Behälters oder der Welle, oder dem Höhenprofil der Modellmasse über einer Fläche.

Aufgrund der ermittelten Messgrössen werden Signale erzeugt und diese Signale werden Zustandsklassen zugeordnet, die repräsentativ für die Konsistenz der Modellmasse sind.

Die Signale können identisch zu den Messgrössen sein oder aufgrund eines Algorithmus bestimmt werden, zum Beispiel mit multi-linearer Regression oder mit anderen multivarianten Verfahren der Datenanalyse.

Aus der Zuordnung werden Parameter bestimmt, welche die Zuordnung von einem Signal zu einer jeweiligen Zustandsklasse für alle Signale erlauben.

Es erfolgt also bevorzugt ein sogenanntes "überwachtes Lernen". Alternativ können auch andere Lernmethoden (aktives Lernen oder unüberwachtes Lernen) verwendet werden, bei denen zum Beispiel Messdaten in Kategorien eingeteilt werden, die sich durch charakteristische Muster voneinander unterscheiden. Die Zustandsklassen sind in diesem Fall nicht von aussen vorgegeben.

Der Prozess wird also bevorzugt adaptiv geregelt.

Die Aufgabe wird ausserdem gelöst durch ein Verfahren zum Aufbau einer Vorrichtung zur Bearbeitung von, insbesondere fetthaltigen, Lebensmittelmassen, insbesondere zum Conchieren von schokoladenhaltigen Massen. Bei der Vorrichtung handelt es sich bevorzugt um eine Vorrichtung, wie sie weiter oben beschrieben wird.

Das Verfahren umfasst erfindungsgemäss die folgenden Schritte. Zunächst wird ein Behälter bereitgestellt, der eine, insbesondere horizontal angeordnete, Welle aufweist, die mit Werkzeugen ausgestattet ist, welche insbesondere drehbar um die Wellenachse angeordnet sind. Danach wird ein Sensor zum Erfassen von Messgrössen angebracht, wobei die Messgrössen Rückschluss auf die Oberflächenstruktur der Lebensmittelmasse erlauben, nämlich dem Höhenprofil der Lebensmittelmasse entlang einer Linie oder einer Vielzahl von Linien, insbesondere über die Länge und/oder Breite des Behälters oder der Welle, oder dem Höhenprofil der Lebensmittelmasse über einer Fläche entsprechen.

Bei dem Behälter kann es sich um einen neuen Behälter handeln oder um den Behälter eine bestehenden Geräts, das mit einem Sensor nachgerüstet wird.

Bei dem Sensor handelt es sich bevorzugt um einen optischen oder akustischen Sensor, insbesondere wie weiter oben beschrieben.

Vorteilhafterweise wird der Vorrichtung ausserdem mit Verarbeitungsmitteln, Steuermitteln und/oder einer Regeleinrichtung ausgestattet, insbesondere wie weiter oben beschrieben.

Die Aufgabe wird ausserdem gelöst durch die Verwendung eines Sensors zum Erfassen von Messgrössen, wobei die Messgrössen Rückschluss auf die Oberflächenstruktur einer Lebensmittelmasse in einer Vorrichtung zur Bearbeitung von, insbesondere fetthaltigen, Lebensmittelmassen, insbesondere in einer Vorrichtung zum Conchieren von schokoladenhaltigen Massen, wobei die Vorrichtung einen Behälter mit mindestens einer, insbesondere horizontal angeordnete, Welle, die mit Werkzeugen ausgestattet ist, welche insbesondere drehbar um die Wellenachse angeordnet sind, umfasst, und die Messgrössen dabei dem Höhenprofil der Lebensmittelmasse entlang einer Linie, insbesondere über die Länge und/oder Breite eines Behälters oder der Welle, oder dem Höhenprofil der Lebensmittelmasse über einer Fläche entsprechen.

Die Aufgabe wird ausserdem gelöst durch ein Computerprogramm für eine Datenverarbeitungsanlage zum Betreiben einer Vorrichtung zur Bearbeitung von, insbesondere fetthaltigen, Lebensmittelmassen, insbesondere zum Conchieren von schokoladenhaltigen Massen, Bei der Vorrichtung handelt es sich bevorzugt um eine Vorrichtung, wie sie weiter oben beschrieben ist. Das Computerprogramm umfasst erfindungsgemäss die folgenden Schritte.

Zunächst werden Messdaten eingelesen. Dann erfolgt ein Klassieren der Messdaten im Hinblick auf Strukturklassen, die repräsentativ für die Konsistenz der Lebensmittelmasse sind und das Ermitteln einer bestimmten Strukturklasse.

Das Klassieren der Modelldaten erfolgt bevorzugt mit einem Klassierungsalgorithmus unter Verwendung von zuvor festgelegten oder gelernten Parametern, die im Speicher der Datenverarbeitungsanlage hinterlegt sind.

Die Strukturklassen sind vorzugsweise, beispielweise in Form von Klassifikatoren, im Speicher der Datenverarbeitungsanlage hinterlegt.

Vorteilhafterweise umfasst das Computerprogramm ausserdem den Vergleich der ermittelten Strukturklasse mit einem Struktursignalsollwert und das Erzeugen einer Signalausgabe bei vordefinierter Nähe zu Struktursignalsollwert.

In einer vorteilhaften Ausführungsform umfasst das Computerprogramm ausserdem die Schritte des Einlesens von Modelldaten, das Klassifizieren der Modelldaten und die Bestimmung von Klassifikatoren für eine nachfolgende Klassierung.

Die Klassifikatoren werden durch Eingabe festgelegt oder in einem Lernprozess ermittelt.

Beim Klassifizieren der Modelldaten werden insbesondere Parameter für einen Klassierungsalgorithmus bestimmt und im Speicher der Datenverarbeitungsanlage hinterlegt.

Die Erfindung ist nachfolgend in Ausführungsbeispielen und anhand von Zeichnungen näher erläutert.

Es zeigen
- Figur 1: eine erfindungsgemässe Vorrichtung in einer ersten Ansicht von oben;
- Figur 2: eine erfindungsgemässe Vorrichtung in einem ersten Schnittbild entlang einer Schnittebene B-B gemäss Figur 1;
- Figur 3: eine erfindungsgemässe Vorrichtung in einem zweiten Schnittbild entlang einer Schnittebene A-A gemäss Figur 1;
- Figur 4: einen Sensorträger in einer perspektivischen Ansicht;
- Figur 5: die Ansicht eines Messblatts, auf welchem in einer farblichen Darstellung Messgrössen über die Zeit aufgetragen sind;
- Figur 6: beispielhafte Verläufe von Strukturindizes während eines Bearbeitungszeitraums;
- Figur 7: Verläufe von verschiedenen Werten während eines Bearbeitungszeitraums.

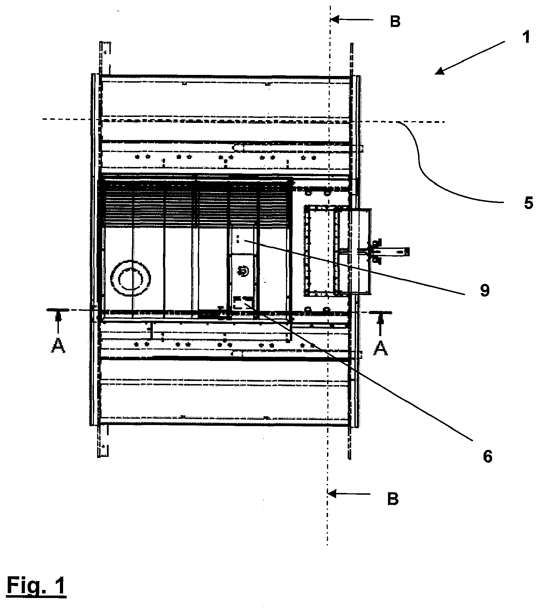

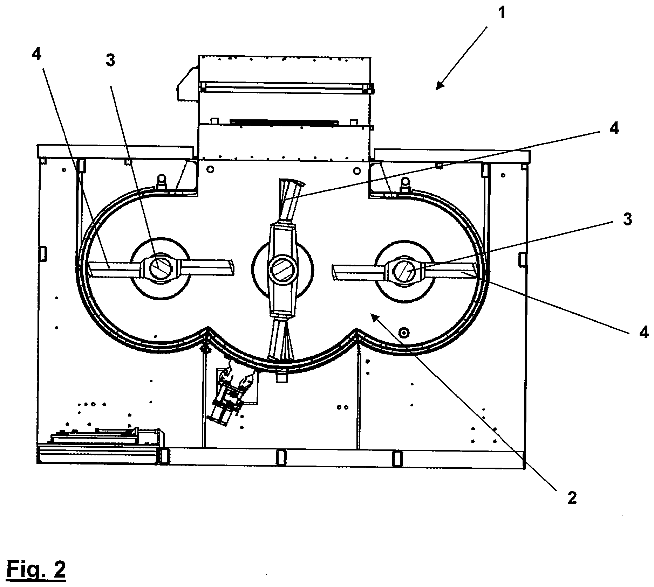

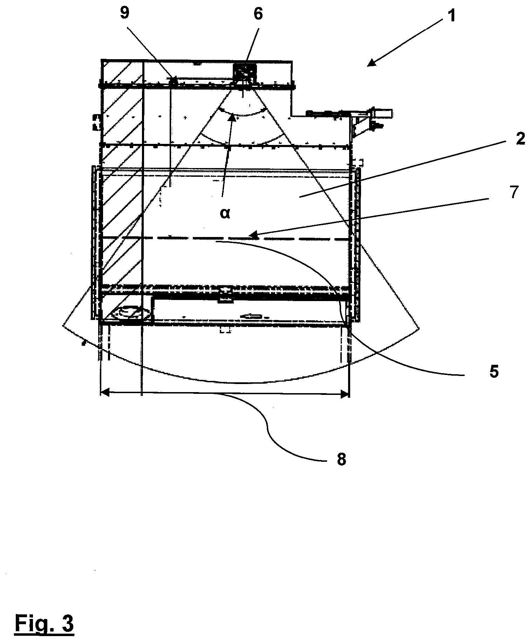

Die Figuren 1, 2 und 3 zeigen unterschiedliche Ansichten einer Vorrichtung 1 zum Conchieren von schokoladenhaltigen Massen mit einen Behälter 2, mehreren horizontal angeordneten Wellen 3, die jeweils mit Conchierwerkzeugen 4 ausgestattet sind, welche drehbar um die jeweilige Wellenachse 5 angeordnet sind.

Die Vorrichtung 1 ist mit einem Sensor 6, hier einem Laserwegmessgeber, zum Erfassen von Messgrössen ausgestattet. Der Laserwegmessgeber erfasst das Höhenprofil der im Behälter befindlichen und nicht explizit dargestellten Lebensmittelmasse entlang einer Messlinie 7, die sich in etwa über die Länge 8 des Behälters 3 erstreckt.

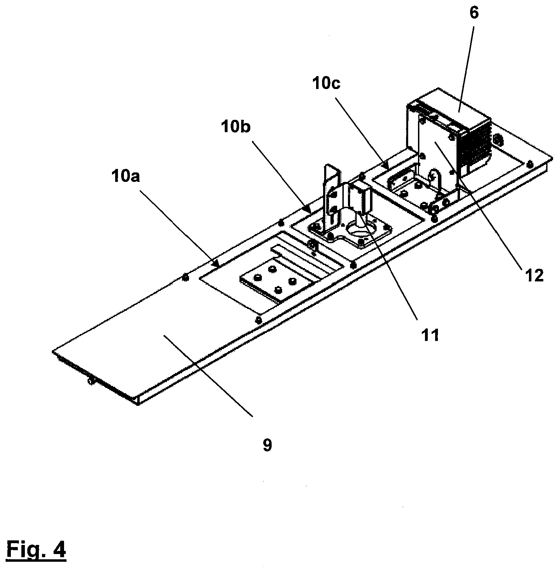

Der Sensor 6 ist, wie in Figur 4 näher dargestellt, auf einem Sensorträger 9 angeordnet.

Der Sensorträger 9 umfasst mehrere Sensorplätze 10a, 10b, 10c, im vorliegenden Fall zum Beispiel drei Sensorplätze 10a, 10b, 10c, von denen hier ein Sensorplatz 10c mit einem Laserwegmessgeber 6 und ein Sensorplatz 10b mit einer optischen Kamera 11 bestückt ist. Ein Sensorplatz 10a bleibt frei. Die optische Kamera 11 erlaubt eine zusätzliche visuelle Kontrolle des Bearbeitungsprozesses, wobei die Daten an einen von der Vorrichtung 1 entfernten Ort geleitet werden können und so eine remote-Kontrolle ermöglicht wird.

Der Laserwegmessgeber 6 detektiert Objekte über einem einstellbaren Winkel a. Der Laserwegmessgeber 6 ist beispielweise an einem neigbaren Montagehalter 12 befestigt, sodass der Scanweg des Laserwegmessgebers 6 auf eine bestimmte Position im Behälter 3 ausrichtbar ist, zum Beispiel auf die mittlerer Welle 3, auch wenn der Sensor nicht genau über der Welle 3 montiert ist.

Über einen Scanweg, also bei einmaligem Durchlaufen des Scanwinkels α, detektiert der Laserwegmessgeber zum Beispiel 700 Messwerte, die dem Höhenprofil entlang der Messlinie 8, die sich über die Arbeitsbreite 8 der Welle 3 erstreckt, entsprechen. Der Laserwegmessgeber 6 arbeitet zum Beispiel mit einer Wiederholfrequenz von 270 Hz, sodass er ein sich zeitlich veränderndes Höhenprofil ermittelt.

Der Sensor 6 ist über einen Datenleitung mit nicht explizit gezeigten Verarbeitungsmitteln verbunden, beispielsweise einer Datenverarbeitungseinrichtung, auf welcher die ermittelten Messwerte dargestellt und/oder ausgewertet werden. Ferner sind an der Vorrichtung 1 ebenfalls nicht explizit dargestellte Steuermittel und/oder eine Regeleinrichtung vorgesehen, über welche die Betriebsparameter der Vorrichtung 1 beeinflusst werden können.

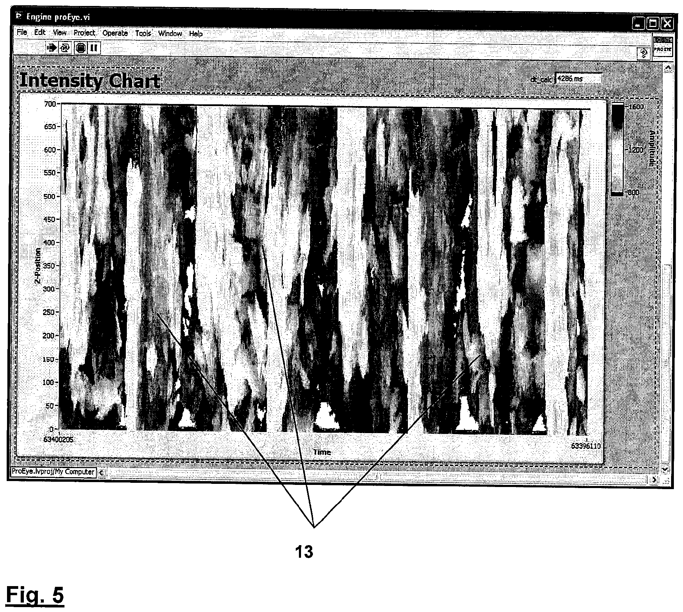

Die Rohmessdaten sind in Figur 5 dargestellt. Die Y-Achse des Messblatts, welche mit Z-Position bezeichnet ist, entspricht den 700 pro Scan erfassten Stützpunkten. Die X-Achse, welche mit Time bezeichnet ist, entspricht der Zeitachse.

Die Messgrössen 13 sind als Pixel in unterschiedlichen Farben für jede Messposition und jeden Zeitpunkt dargestellt.

Die jeweilig dargestellte Farbe entspricht der durch den Scanner ermittelten Höheninformation an dem entsprechenden Stützpunkt zu der entsprechenden Zeit.

Eine gewisse Regelmässigkeit im Verlauf der Zeit ergibt sich durch die Drehung der Werkzeuge, die wiederkehrende Höhenunterschiede erzeugen. Die darüber liegende, eher unregelmässige Struktur enthält Information über die Konsistenz der verarbeiteten Masse.

Die Konsistenz von Schokoladenmasse kann beispielsweise in Form von Strukturklassen definiert werden, die mit entsprechenden Struktursignalen in Form von Strukturindizes zwischen 0 und 10 bezeichnet werden.

Dabei bezeichnet
- der Strukturindex 0 eine sandartige Konsistenz,
- der Strukturindex 2 eine kiesartige Konsistenz,
- der Strukturindex 4 eine ackererdenartige Konsistenz,
- der Strukturindex 6 eine lehmerdenartige Konsistenz,
- der Strukturindex 8 eine pastöse Konsistenz,
- der Strukturindex 9 eine salbenartige Konsistenz und
- der Strukturindex 10 eine flüssige Konsistenz.

Die Konsistenzklassen, in diesem Fall die Werte der Strukturindizes, können zum Beispiel per Hand einer Modellmasse zugeordnet werden, wonach ein Algorithmus per multi-linearer Regression Parameter für eine Zuordnung zwischen Messwerten und Strukturindizes bestimmt.

Mithilfe der Parameter können Strukturindizes für Messwerte beliebiger Massen erstellt werden.

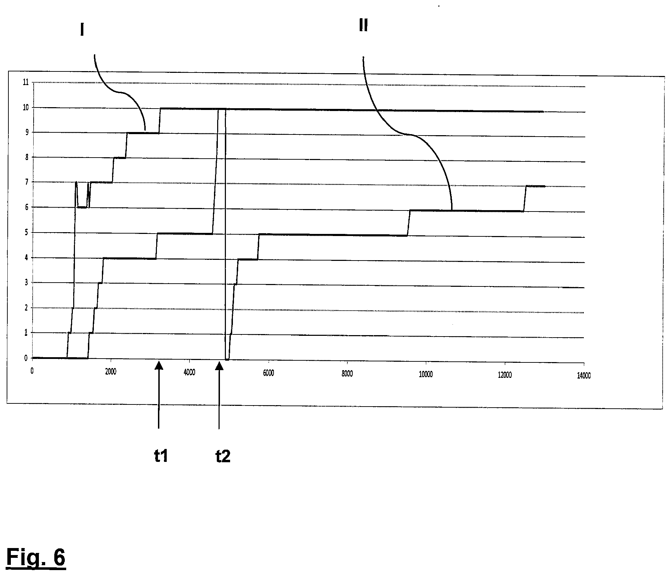

Figur 6 zeigt den zeitlichen Verlauf von Strukturindizes für zwei verschiedene Massen.

Die Kurve I ist für eine dunkle Schokoladenmasse ermittelt worden und zeigt das im Wesentlichen stetige Ansteigen des Strukturindexes bis zum optimalen Wert 10, der zu einem Zeitpunkt t1 erreicht war.

Ein weiteres Conchieren über den Zeitpunkt t1 wäre nicht nötig gewesen und der Prozess hätte unter Kontrolle einer Regeleinrichtung vorher abgebrochen werden können.

Die Kurve II ist für eine weisse Schokoladenmasse ermittelt worden. Wieder zeigt sich zunächst erwartungsgemäss ein Anstieg des Strukturindexes, allerdings bleibt die Masse bei einer erdigen Konsistenz. Zu einem Zeitpunkt t2 erfolgt die Änderung der Drehrichtung, was jedoch auf die weitere Entwicklung des Strukturindexes keinen wesentlichen Einfluss hat.

Mit einer entsprechend ausgelegten Regeleinrichtung könnte das Stagnieren des Strukturindexwertes zu einer Änderung der Betriebsparameter führen, beispielsweise zu einer Änderung der Rezeptur.

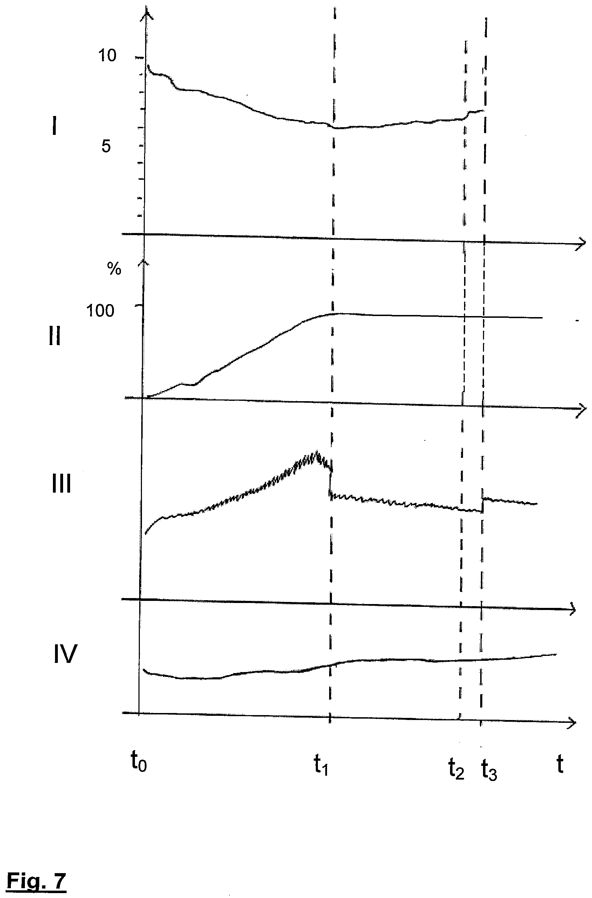

Figur 7 zeigt Verläufe von verschiedenen Werten während eines Bearbeitungszeitraums für eine Schokoladenmasse.

Dabei zeigt Kurve I den Verlauf der Strukturindexes, Kurve II zeigt schematisch den Verlauf des Füllgrads des Behälters, Kurve III zeigt schematisch den Verlauf des Motorstroms und Kurve IV zeigt schematisch den Verlauf der Temperatur im Behälter.

Zu einem Zeitpunkt t0 wird mit der Befüllung des Behälters begonnen, was sich in Kurve II in einem stetig ansteigenden Füllgrad des Behälter dokumentiert. Der Strukturindex wird durch die zunächst flüssige Fettphase dominiert, sodass Kurve I mit zunehmender Füllung zunächst von Wert 10, die die flüssige Konsistenz kennzeichnet, abfällt.

Bei zunehmendem Füllgrad und zunehmender Festigkeit der Masse wird der notwendige Motorstrom für die Drehung der Wellen immer höher, was an Kurve III ersichtlich ist.

Zu einem Zeitpunkt t1 ist die Füllphase beendet, die Paddeldrehzahl wird auf einen langsameren Wert eingestellt, was einen geringeren Motorstrom notwendig macht, wie aus Kurve III ersichtlich ist. Da kein weiteres Material dazukommt, stagniert gemäss Kurve II der Füllgrad.

Nach dem Zeitpunkt t1 erfolgt nun ein Trockenconchieren, wobei der Strukturindex weiter ansteigt, wie aus Kurve I ersichtlich ist. Zu einem Zeitpunkt t2 wird nochmals Fett zu dosiert, was einen sofortigen Anstieg des Strukturindexes zur Folge hat.

Zu einem Zeitpunkt t3 wird die Drehrichtung der Werkzeuge geändert und die Drehzahl erhöht, worauf die Masse plastifiziert und sich verflüssigt. Der Sensor wird dabei abgedeckt, weil er sonst verschmutzen würde, somit wird kein weiterer Strukturindex ermittelt.

## Patentansprüche

1. Vorrichtung zur Bearbeitung von, insbesondere fetthaltigen, Lebensmittelmassen, insbesondere zum Conchieren von schokoladen- und/oder kakaohaltigen Massen,
umfassend
- einen Behälter (2),
- mindestens eine, insbesondere horizontal angeordnete, Welle (3), die mit Werkzeugen (4) ausgestattet ist, welche insbesondere drehbar um die Wellenachse (5) angeordnet sind,
**dadurch gekennzeichnet, dass**
die Vorrichtung (1) mindestens einen Sensor (6) zum Erfassen von Messgrössen (13) umfasst, wobei die Messgrössen (13) Rückschluss auf eine Oberflächeneigenschaft der Lebensmittelmasse erlauben, die nämlich einem Höhenprofil der Lebensmittelmasse entlang mindestens einer Linie, insbesondere über die gesamte Länge und/oder Breite des Behälters (2) oder der Welle (3), oder dem Höhenprofil der Lebensmittelmasse über einer Fläche entsprechen, wobei es sich bei dem Sensor (6) um einen berührungslosen Sensor (6) handelt, der die Oberfläche der in dem Behälter (2) befindlichen Lebensmittelmasse ortsaufgelöst erfasst.

2. Vorrichtung gemäss Anspruch 1, wobei der Sensor (6) ein elektromagnetischer, optischer oder akustischer Sensor (6) ist.

3. Vorrichtung gemäss Anspruch 1 oder 2, wobei der Sensor (6) ein Sensor für eine zeitlich fortlaufende Erfassung der Messgrössen (13) ist.

4. Vorrichtung gemäss Anspruch 1, 2 oder 3, **dadurch gekennzeichnet, dass** es sich bei dem Sensor (6) um einen optischen Wegmessgeber, insbesondere einen Laserwegmessgeber, handelt, der insbesondere mindestens eine Messlinie (7) scannt, wobei die Messlinie (7) insbesondere parallel zur Wellenachse (5) verläuft und/oder die Abtastlänge der Arbeitsbreite (8) der Welle (3) entspricht.

5. Vorrichtung gemäss einem der Ansprüche 1, 2, 3 oder 4, **dadurch gekennzeichnet, dass** die Vorrichtung (1) Verarbeitungsmittel umfasst, welche dafür ausgelegt sind, die ermittelten Messgrössen (13) zu analysieren und ein Struktursignal zu erzeugen, das für den Zustand der Lebensmittelmasse, insbesondere den Grad der Homogenität der Lebensmittelmasse, repräsentativ ist.

6. Vorrichtung gemäss einem der vorhergehenden Ansprüche, **dadurch gekennzeichnet, dass** die Vorrichtung (1) Steuermittel umfasst, welche dafür ausgelegt sind, auf Grundlage der Messgrössen (13) oder auf Grundlage des von einem Verarbeitungsmittel erzeugten Struktursignals ein Steuersignal zum Einstellen von mindestens einem Betriebsparameter zur Verfügung zu stellen.

7. Vorrichtung gemäss einem der vorhergehenden Ansprüche, **dadurch gekennzeichnet, dass** die Vorrichtung (1) eine Regeleinrichtung umfasst, welche dafür ausgelegt ist, aufgrund von Messgrössen (13) Struktursignale zu erzeugen, diese mit einem Struktursignalsollwert zu vergleichen und bei Erreichen einer vorgegebenen Nähe des Struktursignals zum Struktursignalsollwert mindestens eine Steuergrösse zum Einstellen von mindestens einem Betriebsparameter zur Verfügung zu stellen.

8. Verfahren zum Betreiben einer Vorrichtung zur Bearbeitung von, insbesondere fetthaltigen, Lebensmittelmassen, insbesondere zum Conchieren von schokoladenhaltigen Massen, insbesondere einer Vorrichtung (1) gemäss einem der vorhergehenden Ansprüche, umfassend die folgenden Schritte
- Erfassen von Messgrössen (13) mit einem Sensor (6) zum Erfassen von Messgrössen (13), die einen Rückschluss auf mindestens eine Oberflächeneigenschaft der Lebensmittelmasse erlauben, die nämlich dem Höhenprofil der Lebensmittelmasse entlang einer Linie (7), insbesondere über die Länge (8) und/oder Breite eines Behälters (2) oder der Welle (3), oder dem Höhenprofil der Lebensmittelmasse über einer Fläche entsprechen,
wobei die Oberfläche der in dem Behälter (2) befindlichen Lebensmittelmasse berührungslos und ortsaufgelöst erfasst wird, insbesondere mit einem optischen oder akustischen Sensor(6) .

9. Verfahren gemäss Anspruch 8, **gekennzeichnet durch** die folgenden Schritte:
- Erzeugen eines Struktursignals, das das für den Zustand der Lebensmittelmasse, insbesondere den Grad der Homogenität der Lebensmittelmasse, repräsentativ ist.

10. Verfahren gemäss Anspruch 9, **gekennzeichnet durch** die folgenden Schritte:
- Vergleich des Struktursignals mit einem Struktursignalsollwert,
- automatisches Erzeugen eines Steuersignals zum Einstellen von mindestens einem Betriebsparameter aufgrund des Vergleichs.

11. Verfahren gemäss einem der Ansprüche 8 bis 10, umfassend Kalibrierschritte mit
- Erfassen von Messgrössen (13) an einer Modellmasse, wobei die Messgrössen (13) mindestens einer Oberflächeneigenschaft der Modellmasse entsprechen, insbesondere dem Höhenprofil der Modellmasse entlang einer Linie, insbesondere über die Länge und/oder Breite des Behälters (2) oder der Welle (3), oder dem Höhenprofil der Modellmasse über einer Fläche,
- Erzeugen von Signalen aufgrund von Messgrössen (13),
- Zuordnen der Signale zu Zustandsklassen, die repräsentativ für die Konsistenz des Modellmasse sind,
- Bestimmung von Parametern, welche die Zuordnung von einem Signal zu einer jeweiliger Zustandsklasse für alle Signale erlauben.

12. Verfahren zum Aufbau einer Vorrichtung (1) zur Bearbeitung von, insbesondere fetthaltigen, Lebensmittelmassen, insbesondere zum Conchieren von schokoladenhaltigen Massen, umfassend die folgenden Schritte
- Bereitstellen eines Behälters (2) mit mindestens einer, insbesondere horizontal angeordneten, Welle (3), die mit Werkzeugen (4) ausgestattet ist, welche insbesondere drehbar um die Wellenachse (5) angeordnet sind,
- Anbringen eines Sensors (6) zum Erfassen von Messgrössen (13), wobei die Messgrössen (13) Rückschluss auf mindestens eine Oberflächeneigenschaft der Lebensmittelmasse erlauben, die nämlich dem Höhenprofil der Lebensmittelmasse entlang mindestens einer Linie, insbesondere über die Länge und/oder Breite des Behälters (2) oder der Welle (3), oder dem Höhenprofil der Lebensmittelmasse über einer Fläche entsprechen, wobei es sich bei dem Sensor (6) um einen berührungslosen Sensor (6) handelt, der die Oberfläche der in dem Behälter (2) befindlichen Lebensmittelmasse ortsaufgelöst erfasst.

13. Verwendung eines Sensors (6) zum Erfassen von Messgrössen (13), wobei die Messgrössen (13) Rückschluss auf die Oberflächenstruktur einer Lebensmittelmasse erlauben in einer Vorrichtung (1) zur Bearbeitung von, insbesondere fetthaltigen, Lebensmittelmassen, insbesondere in einer Vorrichtung zum Conchieren von schokoladenhaltigen Massen, wobei die Vorrichtung (1) einen Behälters (2) mit mindestens einer, insbesondere horizontal angeordneten, Welle (3), die mit Werkzeugen (4) ausgestattet ist, welche drehbar um die Wellenachse (5) angeordnet sind, umfasst, die Messgrössen (13) dem Höhenprofil der Lebensmittelmasse entlang mindestens einer Linie, insbesondere über die Länge (8) und/oder Breite eines Behälters (2) oder der Welle (3), oder dem Höhenprofil der Lebensmittelmasse über einer Fläche entsprechen.

14. Computerprogramm für eine Datenverarbeitungsanlage zum Betreiben einer Vorrichtung (1) zur Bearbeitung von, insbesondere fetthaltigen, Lebensmittelmassen, insbesondere zum Conchieren von schokoladenhaltigen Massen, gemäss einem der Ansprüche 1-7 umfassend die Schritte:
- Einlesen von Messdaten,
- Klassieren der Messdaten im Hinblick auf Strukturklassen, die repräsentativ für die Konsistenz der Lebensmittelmasse sind und Ermitteln einer Strukturklasse.

15. Computerprogramm nach Anspruch 14 umfassend die Schritte:
- Vergleich der ermittelten Klasse mit einem Struktursignalsollwert,
- Erzeugen einer Signalausgabe bei vordefinierter Nähe zu Struktursignalsollwert.

16. Computerprogramm nach Anspruch 14 oder 15 umfassend die Schritte:
- Einlesen von Modelldaten,
- Klassifizieren der Modelldaten und Bestimmung von Klassifikatoren für eine nachfolgende Klassierung.

## Claims

1. Apparatus for processing food masses, in particular fatty food masses, in particular for conching masses containing chocolate and/or cocoa, comprising
- a container (2),
- at least one, in particular horizontally arranged, shaft (3), which is equipped with tools (4), which are in particular arranged rotatably about the shaft axis (5),
**characterized in that**
the apparatus (1) comprises at least one sensor (6) for sensing measured variables (13), the measured variables (13) allowing conclusions to be drawn about a surface property of the food mass, specifically corresponding to a height profile of the food mass along at least one line, in particular over the entire length and/or width of the container (2) or of the shaft (3), or corresponding to the height profile of the food mass over a surface area, the sensor (6) being a contactless sensor (6), which senses the surface of the food mass located in the container (2) in a spatially resolved manner.

2. Apparatus according to Claim 1, the sensor (6) being an electromagnetic, optical or acoustic sensor (6).

3. Apparatus according to Claim 1 or 2, sensor (6) being a sensor for sensing the measured variables (13) over a continuous time.

4. Apparatus according to Claim 1, 2 or 3, **characterized in that** the sensor (6) is an optical displacement encoder, in particular a laser displacement encoder, which in particular scans at least one measuring line (7), the measuring line (7) running in particular parallel to the shaft axis (5) and/or the scanning length corresponding to the working width (8) of the shaft (3).

5. Apparatus according to one of Claims 1, 2, 3 or 4, **characterized in that** the apparatus (1) comprises processing means which are designed for analysing the determined measured variables (13) and generating a structure signal that is representative of the state of the food mass, in particular the degree of homogeneity of the food mass.

6. Apparatus according to one of the preceding claims, **characterized in that** the apparatus (1) comprises control means which are designed for providing on the basis of the measured variables (13) or on the basis of the structure signal generated by a processing means a control signal for setting at least one operating parameter.

7. Apparatus according to one of the preceding claims, **characterized in that** the apparatus (1) comprises a closed-loop control device, which is designed to generate structure signals on the basis of measured variables (13), compare them with a setpoint structure-signal value and, when a specified proximity of the structure signal to the setpoint structure-signal value is reached, provide at least one controlling variable for setting at least one operating parameter.

8. Method for operating an apparatus for processing food masses, in particular fatty food masses, in particular for conching masses containing chocolate, in particular an apparatus (1) according to one of the preceding claims, comprising the following steps
- sensing measured variables (13) with a sensor (6) for sensing measured variables (13) that allow conclusions to be drawn about at least one surface property of the food mass, specifically corresponding to the height profile of the food mass along a line (7), in particular over the length (8) and/or width of a container (2) or of the shaft (3), or corresponding to the height profile of the food mass over a surface area,
the surface of the food mass located in the container (2) being sensed in a contactless and spatially resolved manner, in particular by an optical or acoustic sensor (6).

9. Method according to Claim 8, **characterized by** the following steps:
- generating a structure signal that is representative of the state of the food mass, in particular the degree of homogeneity of the food mass.

10. Method according to Claim 9, **characterized by** the following steps:
- comparing the structure signal with a setpoint structure-signal value,
- automatically generating a control signal for setting at least one operating parameter on the basis of the comparison.

11. Method according to one of Claims 8 to 10, comprising calibrating steps involving
- sensing measured variables (13) on a model mass, the measured variables (13) corresponding to at least one surface property of the model mass, in particular the height profile of the model mass along a line, in particular over the length and/or width of the container (2) or of the shaft (3), or corresponding to the height profile of the model mass over a surface area,
- generating signals on the basis of measured variables (13),
- assigning the signals to state classes that are representative of the consistency of the model mass,
- determining parameters that allow the assignment of a signal to a respective state class for all signals.

12. Method for constructing an apparatus (1) for processing food masses, in particular fatty food masses, in particular for conching masses containing chocolate, comprising the following steps
- providing a container (2) with at least one, in particular horizontally arranged, shaft (3), which is equipped with tools (4), which are in particular arranged rotatably about the shaft axis (5),
- attaching a sensor (6) for sensing measured variables (13), the measured variables (13) allowing conclusions to be drawn about at least one surface property of the fluid mass, specifically corresponding to the height profile of the food mass along at least one line, in particular over the length and/or width of the container (2) or of the shaft (3), or corresponding to the height profile of the food mass over a surface area, the sensor (6) being a contactless sensor (6), which senses the surface of the food mass located in the container (2) in a spatially resolved manner.

13. Use of a sensor (6) for sensing measured variables (13), the measured variables (13) allowing conclusions to be drawn about the surface structure of a food mass in an apparatus (1) for processing food masses, in particular fatty food masses, in particular in an apparatus for conching masses containing chocolate, the apparatus (1) comprising a container (2) with at least one, in particular horizontally arranged, shaft (3), which is equipped with tools (4), which are in particular arranged rotatably about the shaft axis (5), the measured variables (13) corresponding to the height profile of the food mass along at least one line, in particular over the length (8) and/or width of a container (2) or of the shaft (3), or corresponding to the height profile of the food mass over a surface area.

14. Computer program for a data processing system for operating an apparatus (1) for processing food masses, in particular fatty food masses, in particular for conching masses containing chocolate, according to one of Claims 1-7, comprising the steps of:
- reading in measurement data,
- classifying the measurement data with regard to structure classes that are representative of the consistency of the food mass and determining a structure class.

15. Computer program according to Claim 14, comprising the steps of:
- comparing the determined class with a setpoint structure-signal value,
- generating a signal output when there is a predefined proximity to the setpoint structure-signal value.

16. Computer program according to Claim 14 or 15, comprising the steps of:
- reading in model data,
- classifying the model data and determining classifiers for a subsequent classification.

## Revendications

1. Dispositif de traitement de masses de produits alimentaires, en particulier contenant des matières grasses, en particulier pour le conchage de masses contenant du chocolat et/ou du cacao,
comportant
- un récipient (2),
- au moins un arbre (3) disposé en particulier horizontalement, lequel est équipé d'outils (4), lesquels sont disposés en particulier de manière rotative autour de l'axe d'arbre (5),
**caractérisé en ce que**
le dispositif (1) comporte au moins un capteur (6) servant à la détection de grandeurs de mesure (13), les grandeurs de mesure (13) permettant de déduire une propriété de surface de la masse de produit alimentaire, lesquelles grandeurs de mesure correspondent notamment à un profil de hauteur de la masse de produit alimentaire le long d'au moins une ligne, en particulier sur toute la longueur et/ou la largeur du récipient (2) ou de l'arbre (3), ou au profil de hauteur de la masse de produit alimentaire sur une surface, le capteur (6) étant un capteur sans contact (6) qui détecte, avec une résolution spatiale, la surface de la masse de produit alimentaire se trouvant dans le récipient (2).

2. Dispositif selon la revendication 1, dans lequel le capteur (6) est un capteur (6) électromagnétique, optique ou acoustique.

3. Dispositif selon la revendication 1 ou 2, dans lequel le capteur (6) est un capteur pour une détection continue dans le temps des grandeurs de mesure (13).

4. Dispositif selon la revendication 1, 2 ou 3, **caractérisé en ce que** le capteur (6) est un capteur de mesure de distance optique, en particulier un capteur laser de mesure de distance, qui balaye en particulier au moins une ligne de mesure (7), la ligne de mesure (7) s'étendant en particulier parallèlement à l'axe d'arbre (5) et/ou la longueur de balayage correspondant à la largeur de travail (8) de l'arbre (3).

5. Dispositif selon l'une des revendications 1, 2, 3 ou 4, **caractérisé en ce que** le dispositif (1) comporte des moyens de traitement, lesquels sont conçus pour analyser les grandeurs de mesure déterminées (13) et pour produire un signal structural qui est représentatif de l'état de la masse de produit alimentaire, en particulier du degré d'homogénéité de la masse de produit alimentaire.

6. Dispositif selon l'une des revendications précédentes, **caractérisé en ce que** le dispositif (1) comporte des moyens de commande, lesquels sont conçus pour fournir un signal de commande pour le réglage d'au moins un paramètre de fonctionnement sur la base des grandeurs de mesure (13) ou sur la base du signal structural produit par un moyen de traitement.

7. Dispositif selon l'une des revendications précédentes, **caractérisé en ce que** le dispositif (1) comporte un dispositif de régulation, lequel est conçu pour produire des signaux structuraux en raison de grandeurs de mesure (13), pour comparer ceux-ci à une valeur de consigne de signal structural et pour fournir au moins une grandeur de commande pour le réglage d'au moins un paramètre de fonctionnement lorsqu'une proximité prédéfinie du signal structural par rapport à la valeur de consigne de signal structural est atteinte.

8. Procédé permettant de faire fonctionner un dispositif de traitement de masses de produits alimentaires, en particulier contenant des matières grasses, en particulier pour le conchage de masses contenant du chocolat, en particulier un dispositif (1) selon l'une des revendications précédentes, comportant les étapes suivantes
- détection de grandeurs de mesure (13) à l'aide d'un capteur (6) servant à la détection de grandeurs de mesure (13) qui permettent de déduire au moins une propriété de surface de la masse de produit alimentaire, qui correspondent notamment au profil de hauteur de la masse de produit alimentaire le long d'une ligne (7), en particulier sur la longueur (8) et/ou la largeur d'un récipient (2) ou de l'arbre (3), ou au profil de hauteur de la masse de produit alimentaire sur une surface,
la surface de la masse de produit alimentaire se trouvant dans le récipient (2) étant détectée sans contact et avec résolution spatiale, en particulier à l'aide d'un capteur (6) optique ou acoustique.

9. Procédé selon la revendication 8, **caractérisé par** les étapes suivantes :
- production d'un signal structural qui est représentatif de l'état de la masse de produit alimentaire, en particulier du degré d'homogénéité de la masse de produit alimentaire.

10. Procédé selon la revendication 9, **caractérisé par** les étapes suivantes :
- comparaison du signal structural avec une valeur de consigne de signal structural,
- production automatique d'un signal de commande pour le réglage d'au moins un paramètre de fonctionnement en raison de la comparaison.

11. Procédé selon l'une des revendications 8 à 10, comportant des étapes d'étalonnage comprenant
- la détection de grandeurs de mesure (13) sur une masse de modèle, les grandeurs de mesure (13) correspondant à au moins une propriété de surface de la masse de modèle, en particulier au profil de hauteur de la masse de modèle le long d'une ligne, en particulier sur la longueur et/ou la largeur du récipient (2) ou de l'arbre (3), ou au profil de hauteur de la masse de modèle sur une surface,
- la production de signaux en raison de grandeurs de mesure (13),
- l'association des signaux à des classes d'état qui sont représentatives de la consistance de la masse de modèle,
- la détermination de paramètres, lesquels permettent l'association d'un signal à une classe d'état respective pour tous les signaux.

12. Procédé de construction d'un dispositif (1) de traitement de masses de produits alimentaires, en particulier contenant des matières grasses, en particulier pour le conchage de masses contenant du chocolat, comportant les étapes suivantes
- fourniture d'un récipient (2) doté d'au moins un arbre (3) disposé en particulier horizontalement, lequel est équipé d'outils (4), lesquels sont disposés en particulier de manière rotative autour de l'axe d'arbre (5),
- montage d'un capteur (6) servant à la détection de grandeurs de mesure (13), les grandeurs de mesure (13) permettant de déduire au moins une propriété de surface de la masse de produit alimentaire, lesquelles grandeurs de mesure correspondent notamment au profil de hauteur de la masse de produit alimentaire le long d'au moins une ligne, en particulier sur la longueur et/ou la largeur du récipient (2) ou de l'arbre (3), ou au profil de hauteur de la masse de produit alimentaire sur une surface, le capteur (6) étant un capteur sans contact (6) qui détecte, avec une résolution spatiale, la surface de la masse de produit alimentaire se trouvant dans le récipient (2).

13. Utilisation d'un capteur (6) pour la détection de grandeurs de mesure (13), les grandeurs de mesure (13) permettant de déduire la structure de surface d'une masse de produit alimentaire, dans un dispositif (1) de traitement de masses de produits alimentaires, en particulier contenant des matières grasses, en particulier dans un dispositif pour le conchage de masses contenant du chocolat, le dispositif (1) comportant un récipient (2) doté d'au moins un arbre (3) disposé en particulier horizontalement, lequel est équipé d'outils (4), lesquels sont disposés de manière rotative autour de l'axe d'arbre (5), les grandeurs de mesure (13) correspondant au profil de hauteur de la masse de produit alimentaire le long d'au moins une ligne, en particulier sur la longueur (8) et/ou la largeur d'un récipient (2) ou de l'arbre (3), ou au profil de hauteur de la masse de produit alimentaire sur une surface.

14. Programme informatique pour un système de traitement de données pour faire fonctionner un dispositif (1) pour le traitement de masses de produits alimentaires, en particulier contenant des matières grasses, en particulier pour le conchage de masses contenant du chocolat, selon l'une des revendications 1 à 7, comportant les étapes :
- lecture de données de mesure,
- classification des données de mesure en termes de classes structurales qui sont représentatives de la consistance de la masse de produit alimentaire et détermination d'une classe structurale.

15. Programme informatique selon la revendication 14, comportant les étapes :
- comparaison de la classe déterminée avec une valeur de consigne de signal structural,
- production d'une sortie de signal en cas de proximité prédéfinie par rapport à la valeur de consigne de signal structural.

16. Programme informatique selon la revendication 14 ou 15, comportant les étapes :
- lecture de données de modèle,
- classification des données de modèle et détermination de classificateurs pour un classement subséquent.
